# EUROPÄISCHE PATENTSCHRIFT

(11) **EP 1 814 923 B1**
(45) Veröffentlichungstag und Bekanntmachung des Hinweises auf die Patenterteilung: **14.05.2008**
(21) Anmeldenummer: 05807619.1
(22) Anmeldetag: 16.11.2005
(51) Int. Cl.: C08F 20/06, A61L 15/60, C07C 51/43, C07C 57/04

(54) **VERFAHREN ZUR HERSTELLUNG WASSERABSORBIERENDER POLYMERE**
METHOD FOR PRODUCING WATER-ABSORBING POLYMERS
PROCEDE DE PRODUCTION DE POLYMERES HYDROABSORBANTS

(30) Priorität: 18.11.2004 DE 102004055765
(43) Veröffentlichungstag der Anmeldung: 08.08.2007
(73) Patentinhaber: BASF SE, 67056 Ludwigshafen (DE)
(72) Erfinder: FUNK, Rüdiger, 65527 Niedernhausen (DE); STUEVEN, Uwe, 65812 Bad Soden (DE); MARTIN, Friedrich-Georg, 69124 Heidelberg (DE); SCHRÖDER, Jürgen, 67071 Ludwigshafen (DE)
(86) Internationale Anmeldenummer: PCT/EP2005/012282
(87) Internationale Veröffentlichungsnummer: WO 2006/053731

(56) Entgegenhaltungen:
- WO-A-00/75097
- WO-A-99/14181

## Beschreibung

Die vorliegende Erfindung betrifft Verfahren zur Herstellung wasserabsorbierender Polymere durch Polymerisation einer Monomerlösung, wässrige Monomerlösungen zur Herstellung wasserabsorbierender Polymere, wasserabsorbierende Polymere, Verfahren zur Herstellung von Hygieneartikeln sowie Hygieneartikel.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben. Die mit Abstand wichtigsten Monomere zur Herstellung wasserabsorbierender Polymere sind Acrylsäure und Acrylsäuresalze.

Acrylsäure kann nach verschiedenen Verfahren hergestellt werden. Diese Verfahren werden beispielsweise in Ullmann's Encyclopedia of Industrial Chemistry, 6. Auflage, Band 1, Seiten 289 bis 296 beschrieben. Das bedeutendste Verfahren ist zurzeit die zweistufige Propenoxidation.

Bei der Herstellung wasserabsorbierender Polymere wird ein niedriger Gehalt an extrahierbaren Anteilen und an nicht umgesetzten Monomeren angestrebt. Insbesondere können die exhtrahierbaren Anteile bei der Anwendung der wasserabsorbierenden Partikel aus den wasserunlöslichen, wasserquellbaren Polymeren ausgewaschen werden und tragen somit nichts zur Absorptionsleistung der Polymere bei. Dabei können auch nicht umgesetzte Monomere, wie Acrylsäure, freigesetzt werden, was aufgrund der hautreizenden Wirkung unerwünscht ist.

Aufgabe der vorliegenden Erfindung war daher die Bereitstellung eines verbesserten Verfahrens zur Herstellung wasserabsorbierender Polymere, bei dem ein Produkt mit geringen extrahierbaren Anteilen und wenig Restmonomer erhalten wird.

Bei der zweistufigen Propenoxidation entstehen auch Neben- und Folgeprodukte, die bei der Polymerisation stören und aus Acrylsäure abgetrennt werden müssen.

DE-A-39 41 996 beschreibt den störenden Einfluss von Aldehyden bei der Acrylsäurepolymerisation und offenbart ein Verfahren zur chemischen Abtrennung der Aldehyde aus Acrylsäure.

DE-A-102 21 203 lehrt die Extraktion von aldehydischen Verunreinigungen aus wässrigen Natriumacrylatlösungen.

DE-A-22 10 956 offenbart, dass Protoanemonin die Polymerisation von Acrylsäure verzögert und lehrt die destillative Reinigung von Acrylsäure.

EP-A-1 302 485 beschreibt ein Verfahren zur Herstellung wasserabsorbierender Polymere. Die Schrift offenbart, dass ein hoher Gehalt an Protoanemonin in der verwendeten Acrylsäure zu einem erhöhten Anteil an Restmonomer und Extrahierbaren im wasserabsorbierenden Polymer führt. Acrylsäure hat einen niedrigeren Siedepunkt und kann destillativ von Protoanemonin abgetrennt werden.

EP-A-0 574 260 offenbart ein Verfahren zur Herstellung wasserabsorbierender Polymere mit wenig Restmonomer. Die Schrift lehrt, dass der Restmonomergehalt von der Konzentration an β-Hydroxypropionsäure in der Monomerlösung abhängt und empfiehlt die Verwendung frisch destillierter Acrylsäure.

DE-A-102 57 449 offenbart den Einfluss oligomerer Acrylsäuren auf den Restmonomerengehalt wasserabsorbierender Polymere und beschreibt, dass oligomere Acrylsäuren durch Kristallisation abgetrennt werden können.

DE-A-102 21 202 offenbart ein Verfahren zur Herstellung wasserabsorbierender Polymere mit niedrigen Restmonomerengehalt, bei dem Acrylsäure durch Kristallisation gereinigt und die Monomerlösung durch Auflösen von Acrylsäurekristallen in Natronlauge hergestellt wird.

Neben den obengenannten Verunreinigungen enthält durch Propenoxidation hergestellte Acrylsäure auch Allylacrylat. Verbindungen mit mindestens zwei ethylenisch ungesättigten Gruppen, wie Allylacrylat, werden bei der Herstellung wasserabsorbierender Polymere als Vernetzer eingesetzt, wobei auch dem Allylacrylat ähnliche Verbindungen verwendet werden. In DE-A-195 43 368 und DE-A-196 46 484 werden beispielsweise Vernetzer genannt, die eine Allylgruppe und eine Acrylatgruppe enthalten. Gemäß der Monographie "Modern Superabsorbent Polymer Technology", F.L. Buchholz und A.T. Graham, Wiley-VCH, 1998, Seiten 20 bis 23 und 74 bis 77, ist das dem Allylacrylat sehr ähnliche Allylmethacrylat ein üblicher Vernetzer.

Da bei der Herstellung wasserabsorbierender Polymere üblicherweise mindestens 0,1 Gew.-% Vernetzer, bezogen auf Acrylsäure, eingesetzt wird, wurde der Abtrennung von Allylacrylat aus Acrylsäure bislang keine Bedeutung beigemessen. Insbesondere, weil sich Allylacrylat nur schwer aus Acrylsäure abtrennen lässt.

So ist der Siedepunktsunterschied zwischen Acrylsäure und Allylacrylat nur gering, was die destillative Abtrennung erschwert. Beispielsweise enthält handelsübliche Acrylsäure noch größere Mengen an Essigsäure, obwohl sich Essigsäure aufgrund ihres günstigeren Siedepunktes leichter von Acrylsäure abtrennen lässt.

Die strukturelle Ähnlichkeit zur Acrylsäure erschwert dagegen die Abtrennung durch Kristallisation. Beispielsweise kann Furfural in Acrylsäure durch einstufige Kristallisation um einen Faktor von über 50 abgereichert werden. Für Allylacrylat beträgt der Abreicherungsgrad dagegen nur etwa 7. So enthielt die zur Herstellung wasserabsorbierender Polymere verwendete Acrylsäure bislang Allylacrylat.

Die Monographie "Modern Superabsorbent Polymer Technology", F.L. Buchholz und A.T. Graham, Wiley-VCH, 1998, Seiten 121 und 122, enthält ein Gaschromatogramm kommerziell verfügbarer Acrylsäure. Die dort analysierte Acrylsäure enthielt noch ca. 0,003 Gew.-% Allylacrylat.

Überraschenderweise wurde nun gefunden, dass Allylacrylat bereits in geringen Konzentrationen eine negativen Einfluss auf die Herstellung wasserabsorbierender Polymere hat. Insbesondere führen bereits geringe Allylacrylatkonzentrationen zu einem Anstieg extrahierbarer Anteile und zu erhöhten Restmonomerengehalten. Daselbe gilt für Allylalkohol, wobei Allylalkohol bereits in der Acrylsäure enthalten sein kann oder erst bei der Herstellung der zumindest teilneutralisierten Monomerlösung durch Hydrolyse aus Allylacrylat entstehen kann.

Gelöst wurde die Aufgabe der vorliegenden Erfindung durch ein Verfahren zur Herstellung wasserabsorbierender Polymere durch Polymerisation einer Monomerlösung, enthaltend
a) Acrylsäure, wobei die Acrylsäure zumindest teilweise neutralisiert sein kann,
b) mindestens einen Vernetzer,
c) Allylacrylat und/oder Allylalkohol,
d) gegebenenfalls ein oder mehrere mit den unter a) genannten Monomeren copolymerisierbare ethylenisch und/oder allylisch ungesättigte Monomere und
e) gegebenenfalls ein oder mehrere wasserlösliche Polymere,
dadurch gekennzeichnet, dass die Lösung höchstens 0,002 Gew.-% Allylacrylat und/oder Allylalkohol, bezogen auf Acrylsäure, enthält.

Vorzugsweise werden wässrige Monomerlösungen eingesetzt. Die gemäß dem erfindungsgemäßen Verfahren hergestellten Hydrogele können getrocknet, gemahlen und klassiert werden.

In einer bevorzugten Ausführungsform werden die wasserabsorbierenden Polymere nachvernetzt.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Die wasserabsorbierenden Polymere weisen typischerweise eine Zentrifugenretentionskapazität (CRC) von mindestens 15 g/g, vorzugsweise mindestens 20 g/g, besonders bevorzugt mindestens 25 g/g, auf. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Die nachvernetzten wasserabsorbierenden Polymere weisen typischerweise eine Absorption unter Druck 0,7 psi (4,83 kPa) von mindestens 15 g/g, vorzugsweise mindestens 20 g/g, besonders bevorzugt mindestens 25 g/g, auf. Die Absorption unter Druck (AUL) wird gemäß der von der EDANA (European Disposables and Nonwovens Association) empfohlenen Testmethode Nr. 442.2-02 "Absorption under pressure" bestimmt.

Der Gehalt an Allylacrylat und/oder Allylalkohol beträgt vorzugsweise höchstens 0,0015 Gew.-%, besonders bevorzugt höchstens 0,001 Gew.-%, ganz besonders bevorzugt höchstens 0,0005 Gew.-%, jeweils bezogen auf Acrylsäure, wobei ein Gehalt von x Gew.-% Allylacrylat und/oder Allylalkohol einen Gehalt von y Gew.-% Allylacrylat und z Gew.-% Allylalkohol bedeutet, wobei gilt x = y + z und y, z ≤ x.

Das Gewichtsverhältnis z/y beträgt vorzugsweise mindestens 0,001, besonders bevorzugt mindestens 0,1, ganz besonders bevorzugt mindestens 0,5, und vorzugsweise höchstens 500, besonders bevorzugt höchstens 50, ganz besonders bevorzugt höchstens 1.

Der Anteil an Acrylsäure in der Mischung a) bis e) beträgt typischerweise mindestens 50 Gew.-%, vorzugsweise mindestens 80 Gew.%, besonders bevorzugt mindestens 95 Gew.-%, ganz besonders bevorzugt mindestens 99 Gew.%, wobei die Anwesenheit der Komponenten d) und e) jeweils optional ist.

Vorzugsweise wird die eingesetzte Acrylsäure durch Gasphasenoxidation von Propan, Propen und/oder Acrolein hergestellt, wobei die Gasphasenoxidation einstufig, zweistufig oder dreistufig durchgeführt werden kann. Bevorzugt ist die zweistufige Oxidation von Propen, bei der in einer ersten Stufe Propen zu Acrolein und in einer zweiten Stufe Acrolein zu Acrylsäure umgesetzt werden.

Aus dem Reaktionsgemisch wird Acrylsäure in bekannter Weise isoliert, beispielsweise durch fraktionierte Kondensation, wie in DE-A-197 40 253 beschrieben, durch Totalkondensation, wie in DE-A-34 29 391 und DE-A-21 64 767 beschrieben, oder durch Absorption in ein geeignetes Absorptionsmittel. Geeignete Absorptionsmittel sind beispielsweise hochsiedende organische Lösungsmittel, wie in DE-A-21 36 396 und DE-A-43 08 087 beschrieben, und Wasser, wie in EP-A-0 511 111 beschrieben.

Die nach diesen Verfahren hergestellte Acrylsäure enthält üblicherweise weniger als 2 Gew.-%, vorzugsweise weniger als 1,5 Gew-%, besonders bevorzugt weniger als 1 Gew.-%, ganz besonders bevorzugt weniger als 0,5 Gew.-%, an Verunreinigungen, d.h., der Acrylsäuregehalt beträgt üblicherweise mindestens 98 Gew.-%, vorzugsweise mindesten 98,5 Gew.-%, besonders bevorzugt mindestend 99 Gew.-%, ganz besonders bevorzugt mindestens 99,5 Gew.-%.

Üblicherweise enthält die nach den obengenannten Verfahren hergestellte Acrylsäure noch mindestens 0,02 Gew.-%, 0,015 Gew.-%, 0,01 Gew.-% oder 0,005 Gew.-% Allylacrylat und/oder Allylalkohol.

Nach dem erfindungsgemäßen Verfahren wird die Acrylsäure vor ihrer Verwendung zur Herstellung wasserabsorbierender Polymere weiter gereinigt, vorzugsweise durch Kristallisation.

Dabei wird ein Teil der Acrylsäure unter Kühlung kristallisiert. Die Kristalle werden von der Mutterlauge getrennt und aufgeschmolzen, in Wasser oder wässriger Natronlauge gelöst. Vorzugsweise setzt man hierbei der Acrylsäure geringe Mengen eines Polymerisationsinhibitors, vorzugsweise eines Hydrochinonhalbethers, wie Hydrochinonmonomethylether, zu. Die Menge liegt üblicherweise im Bereich von 0,0001 bis 0,015 Gew.-%, vorzugsweise im Bereich von 0,0005 bis 0,013 Gew.-%, besonders bevorzugt im Bereich von 0,003 bis 0,007 Gew.-%.

Die Acrylsäure wird ein- oder mehrfach, vorzugsweise zweifach, dreifach oder vierfach, besonders bevorzugt zweifach, kristallisiert, bis der gewünschte Reinheitsgrad erreicht ist. Vorzugsweise arbeitet man dabei nach dem Gegenstromprinzip, d.h. die Mutterlauge der jeweiligen Kristallisationsstufe wird der jeweils vorangehenden Kristallisationsstufe zugeführt. Gegebenenfalls werden noch weitere Reinigungsschritte durchgeführt.

In einer alternativen Ausführungsform wird die bei der Kristallisation anfallende Mutterlauge, bei einer mehrstufigen Kristallisation, vorzugsweise die in der ersten Stufe anfallende Mutterlauge, einer einfachen Destillation oder einer fraktionierenden Destillation zugeführt. Hierbei wird Acrylsäure über Kopf destilliert und die schwerflüchtigen Verunreinigungen der Mutterlauge, wie Maleinsäure(anhydrid) und Prozessinhibitoren, d.h. hochwirksame Polymerisationsinhibitoren, wie Phenotiazin und Hydrochinon, werden als Sumpf ausgeschleust. Verfahren hierzu sind aus der WO-A-00/01657 bekannt. Zweckmäßigerweise wird für die einfache Destillation der Mutterlauge ein Fallfilmverdampfer eingesetzt. Die Mutterlauge kann dann einer anderen Verwendung zugeführt, beispielsweise zur Herstellung von Acrylsäureestern, oder in die Kristallisation rückgeführt werden.

Vorzugsweise führt man die Kristallisation in der jeweiligen Kristallisationsstufe so weit, dass wenigstens 20 Gew.-% und vorzugsweise wenigstens 40 Gew.-% der Acrylsäure auskristallisiert wird. Typischerweise wird in einer Kristallisationsstufe nicht mehr als 90 Gew.-%, vorzugsweise nicht mehr als 80 Gew.-%, insbesondere nicht mehr als 70 Gew.-% der in der jeweiligen Kristallisationsstufe eingesetzten Acrylsäure auskristallisiert, um eine hinreichende Reinigungswirkung zu erzielen.

Der im erfindungsgemäßen Verfahren einsetzbare Kristaller unterliegt an sich keiner Beschränkung. Als besonders geeignet haben sich Kristaller erwiesen, deren Funktion auf der Bildung von Kristallen auf gekühlten Flächen beruht. Derartige Kristallisationsverfahren werden auch als Schichtkristallisation bezeichnet. Geeignete Apparate finden sich in den in DE A-102 57 449 auf Seite 4, Zeile 6 und 7, angegebenen Patentschriften.

Zur Schichtkristallisation wird die zu reinigende Acrylsäure mit den gekühlten Flächen eines Wärmetauschers in Kontakt gebracht. Dabei kühlt man die Wärmetauscherflächen des Kristallers vorzugsweise auf Temperaturen, die bis zu 40°C unterhalb der Schmelztemperatur der zu reinigenden Acrylsäure liegen. Bei Erreichen des gewünschten Kristallisationsgrades wird der Abkühlvorgang beendet und die flüssige Mutterlauge abgeführt, beispielsweise durch Abpumpen oder Abfließen. Die Isolierung der gereinigten, kristallisierten Acrylsäure erfolgt üblicherweise durch Aufschmelzen der kristallisierten Acrylsäure, beispielsweise durch Erwärmen der Wärmetauscherflächen auf eine Temperatur oberhalb der Schmelztemperatur der Acrylsäure und/oder durch Zufuhr einer Schmelze gereinigter Acrylsäure. Hierbei fällt die gereinigte Acrylsäure als Schmelze an und wird als solche isoliert. Auch kann man die kristalline Acrylsäure in Wasser oder wässriger Natronlauge lösen und die so erhaltene Lösung direkt in der nachfolgenden Polymerisation einsetzen.

Als zusätzlichen Reinigungschritt kann man bei der Schichtkristallisation beispielsweise die auf den Wärmetauscherflächen abgeschiedene Kristallschicht anschwitzen. Hierzu wird die Temperatur der Kristallschicht etwas angehoben, beispielsweise um 0,5 bis 5°C oberhalb der Schmelztemperatur, wobei bevorzugt die höher verunreinigten Bereiche der Kristallschicht abschmelzen und so eine zusätzliche Reinigungswirkung erzielt wird. Das Schwitzprodukt wird dann der Mutterlauge zugeführt und mit dieser weiter verarbeitet. Auch kann man die Kristallschicht mit einer Reinigungsflüssigkeit, beispielsweise einer Schmelze von bereits gereinigter Acrylsäure, behandeln.

Die zur Schichtkristallisation erforderliche Temperatur hängt vom Grad der Verunreinigung ab. Die Obergrenze ist naturgemäß die Temperatur, bei der sich die bereits kristallisierte Acrylsäure mit der in der Mutterlauge enthaltenen Acrylsäure im Gleichgewicht befindet (Gleichgewichtstemperatur). Je nach Zusammensetzung des Rohproduktes liegt die Gleichgewichtstemperatur im Bereich von 5 bis 13,5°C. Die Temperatur der zu kristallisierenden Acrylsäure liegt vorzugsweise im Bereich von 0 bis 13,5°C, vorzugsweise im Bereich von 5 bis 12°C, wobei stark unterkühlte Schmelzen üblicherweise vermieden werden. Insbesondere wird man bei der dynamischen Schichtkristallisation das Kühlmedium, das zur Abfuhr der Kristallisationswärme erforderlich ist, während des Kristallisationsvorgangs von etwa +5 bis -5°C auf etwa -10 bis -25°C abkühlen. Bei einer statisch durchgeführten Schichtkristallisation wird man vorzugsweise das Kühlmedium während des Kristallisationsvorgangs von einer Temperatur von etwa +5 bis -15°C auf etwa -15 bis -30°C abkühlen.

In einer Ausführungsform des Kristallisationsverfahrens führt man die Schichtkristallisation in Gegenwart von Impfkristallen durch.

Die Kristallisation an Kühlflächen kann als dynamisches oder statisches Verfahren durchgeführt werden. Dynamische Verfahren sind beispielsweise aus EP-A-0 616 998 bekannt, statische beispielsweise aus US-3,597,164. Bei den dynamischen Kristallisationsverfahren wird das zu kristallisierende Rohprodukt in einer strömenden Bewegung gehalten. Dies kann durch eine erzwungene Strömung in voll durchströmten Wärmetauschern geschehen, wie in DE-A-26 06 364 beschrieben, oder durch einen Rieselfilm auf eine gekühlte Wand, wie Kühlwalzen oder Kühlbänder. Bei der statischen Kristallisation findet ein Stoffaustausch in der flüssigen Phase nur durch freie Konvektion statt (ruhende Schmelze). Die Schichtkristallisation an Kühlflächen im dynamischen Verfahrensbetrieb ist in der vorliegenden Erfindung bevorzugt.

Als Alternative zur Schichtkristallisation kann die Kristallisation auch als Suspensionskristallisation durchgeführt werden. Bei der Suspensionskristallisation wird durch Kühlung des Rohprodukts eine Kristallsuspension in einer an Verunreinuigungen angereicherten Schmelze erzeugt. Die Kristalle können dabei unmittelbar in der Suspension (Schmelze) wachsen oder sich als Schicht auf einer gekühlten Wand abscheiden, von der sie anschließend abgekratzt und in der Restschmelze suspendiert werden. Die Kristallsuspension wird vorzugsweise während des Verfahrens bewegt, wozu insbesondere umgepumpt oder gerührt wird. Die Suspensionskristallisation kann kontinuierlich oder diskontinuierlich, vorzugsweise kontinuierlich, betrieben werden.

Die als Einsatzstoff für die Kristallisation verwendete Acrylsäure enthält üblicherweise weniger als 2 Gew.-%, vorzugsweise weniger als 1,5 Gew-%, besonders bevorzugt weniger als 1 Gew.-%, ganz besonders bevorzugt weniger als 0,5 Gew.-%, an Verunreinigungen, d.h., der Acrylsäuregehalt beträgt üblicherweise mindestens 98 Gew.-%, vorzugsweise mindesten 98,5 Gew.-%, besonders bevorzugt mindestend 99 Gew.-%, ganz besonders bevorzugt mindestens 99,5 Gew.-%.

Üblicherweise enthält die als Einsatzstoff für die Kristallisation verwendete Acrylsäure noch mindestens 0,02 Gew.-%, 0,015 Gew.-%, 0,01 Gew.-% oder 0,005 Gew.-% Allylacrylat und/oderAllylalkohol.

Die durch Kristallisation erzeugte Acrylsäure enthält höchstens 0,002 Gew.-%, vorzugsweise höchstens 0,0015 Gew.-%, besonders bevorzugt höchstens 0,001 Gew.-%, ganz besonders bevorzugt höchstens 0,0005 Gew.-%, Allylacrylat und/oder Allylalkohol, jeweils bezogen auf Acrylsäure.

Die Acrylsäure a), enthält vorzugsweise höchstens 0,015 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 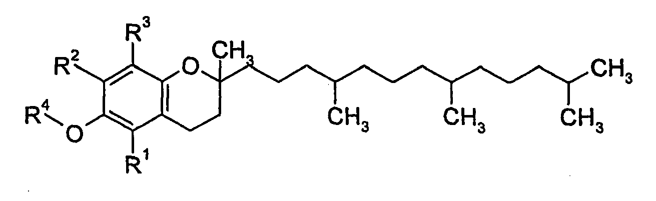 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Hydrochinonhalbether werden der Acrylsäure a) bevorzugt zu 5 bis 130 ppm, besonders bevorzugt 30 bis 70 ppm, inbesondere um 50 ppm zugesetzt.

Die wasserabsorbierenden Polymere sind vernetzt, d.h. die Polymerisation wird in Gegenwart von Verbindungen mit mindestens zwei polymerisierbaren Gruppen, die in das Polymemetzwerk radikalisch einpolymerisiert werden können, durchgeführt. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und in der deutschen Patentanmeldung mit dem Aktenzeichen 10331450.4 beschrieben, gemischte Acrylate, die neben Acrylatgruppen weitere ethylenisch ungesättigte Gruppen enthalten, wie in den deutschen Patentanmeldungen mit den Aktenzeichen 10331456.3 und 10355401.7 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi- Pentaerythritoltri- und Pentaerythritoltetraallylether, Polyethylenglykoldiallylether, Ethylenglykoldiallylether, Glyzerin- und triallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, inbesondere Di- und Triacrylate des 3-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in der älteren deutschen Anmeldung mit Aktenzeichen DE 10319462.2 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 ppm) im wasseraborbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Mit Acrylsäure a) copolymerisierbare ethylenisch ungesättigte Monomere d) sind beispielsweise Methacrylsäure, Maleinsäure, Fumarsäure, Itaconsäure, Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere e) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Grundpolymers sowie weitere geeignete hydrophile ethylenisch ungesättigte Monomere d) werden in DE-A-199 41 423, EP-A-0 686 650, WO-A-01/45758 und WO-A-03/104300 beschrieben.

Wasserabsorbierende Polymere werden üblicherweise durch Polymerisation einer wässrigen Monomerlösung und gegebenenfalls einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A-0 445 619, DE-A-19 846 413)
- Polymerisation im Kneter, wobei durch beispielsweise gegenläufige Rührwellen kontinuierlich zerkleinert wird, (WO-A-01/38402)
- Polymerisation auf dem Band und anschließende Zerkleinerung im Fleischwolf, Extruder oder Kneter (DE-A-38 25 366, US-6,241,928)
- Emulsionspolymerisation, wobei bereits Perlpolymerisate relativ enger Gelgrößenverteilung anfallen (EP-A-0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO-A-02/94328, WO-A-02/94329)

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Die Säuregruppen der erhaltenen Hydrogele sind üblicherweise teilweise neutralisiert, vorzugsweise zu 25 bis 85 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium als Alkalimetalle besonders bevorzugt sind, ganz besonders bevorzugt jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung oder bevorzugt auch als Feststoff erreicht.

Die Neutralisation kann nach der Polymerisation auf der Stufe des Hydrogels durchgeführt werden. Es ist aber auch möglich bis zu 40 mol-%, vorzugsweise 10 bis 30 mol-%, besonders bevorzugt 15 bis 25 mol-%, der Säureguppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels einzustellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Auf die weitere Behandlung des erhaltenen Hydrogels, dessen Säuregruppen zumindest teilweise neutralisiert sein können, kommt es bei dem erfindungsgemäßen Verfahren nicht an. Das erfindungsgemäße Verfahren kann beispielsweise noch die Schritte Trocknung, Mahlung, Siebung und/oder Nachvernetzung umfassen.

Das neutralisierte Hydrogel wird dann mit einem Band- oder Walzentrockner getrocknet bis der Restfeuchtegehalt vorzugsweise unter 10 Gew.-%, insbesondere unter 5 Gew.-% liegt, wobei der Wassergehalt gemäß der von der EDANA (European Disposables and Nonwovens Association) empfohlenen Testmethode Nr. 430.2-02 "Moisture content" bestimmt wird. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 800 µm, und vorzugsweise über 100 µm, besonders bevorzugt über 150 µm, ganz besonders bevorzugt über 200 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "partie size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A-0 083 022, EP-A-543 303 und EP-A-937 736 beschrieben, di- oder polyfunktionelle Alkohole, wie in DE-C-33 14 019, DE-C-35 23 617 und EP-A-450 922 beschrieben, oder β-Hydroxyalkylamide, wie in DE-A-102 04 938 und US-6,239,230 beschrieben.

Desweiteren sind in DE-A-40 20 780 zyclische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in der deutschen Patentanmeldung mit dem Aktenzeichen 10334584.1 bizyklische Amidacetale, in EP-A-1 199 327 Oxetane und zyklische Harnstoffe und in WO-A-03/031482 Morpholin-2,3-dion und dessen Derivate als geeignete Oberflächennnachvernetzer beschrieben.

Die Nachvernetzung wird üblicherweise so durchgeführt, dass eine Lösung des O-berflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Ein weiterer Gegenstand der vorliegenden Erfindung sind wasserabsorbierende Polymere, die nach dem oben beschriebenen Verfahren erhältlich sind.

Ein weiterer Gegenstand der vorliegenden Erfindung sind wässrige Monomerlösungen zur Herstellung wasserabsorbierender Polymere, enthaltend
a) Acrylsäure, wobei die Acrylsäure zumindest teilweise neutralisiert sein kann,
b) mindestens einen Vernetzer,
c) Allylacrylat und/oder Allylalkohol,
d) gegebenenfalls ein oder mehrere mit den unter a) genannten Monomeren copolymerisierbare ethylenisch und/oder allylisch ungesättigte Monomere und
e) gegebenenfalls ein oder mehrere wasserlösliche Polymere,
wobei die Lösung höchstens 0,002 Gew.-% Allylacrylat und/oder Allylalkohol, bezogen auf Acrylsäure, enthält, und wobei für die Komponenten a) bis e) das obengenannte gilt.

Ein weiterer Gegenstand der vorliegenden Erfindung sind wasserabsorbierende Polymere, enthaltend
i) einpolymerisierte Acrylsäure, wobei die einpolymerisierte Acrylsäure zumindest teilweise neutralisiert sein kann,
ii) mindestens einen einpolymerisierten Vernetzer,
iii) einpolymerisiertes Allylacrylat und/oder Allylalkohol,
iv) gegebenenfalls ein oder mehrere einpolymerisierte mit den unter i) genannten Monomeren copolymerisierbare ethylenisch und/oder allylisch ungesättigte Monomere und
v) gegebenenfalls ein oder mehrere wasserlösliche Polymere, auf die die unter i) genannten Monomere zumindest teilweise aufgeproft sind,
wobei die Polymere höchstens 0,002 Gew.-% einpolymerisiertes Allylacrylat und/oder einpolymerisierten Allylalkohol, bezogen auf einpolymerisierte Acrylsäure, enthalten, und wobei für die Komponenten i) bis v) sinngemäß das für die Komponenten a) bis e) obengenannte gilt.

Ein weiterer Gegenstand der vorliegenden Erfindung sind Verfahren zur Herstellung von Hygieneartikeln, insbesondere Windeln, umfassend das obengenannte Verfahren zur Herstellung wasserabsorbierender Polymere.

Ein weiterer Gegenstand der vorliegenden Erfindung sind Hygieneartikel, enthaltend eine absorbierende Schicht bestehend aus 50 bis 100 Gew.-%, vorzugsweise 60 bis 100 Gew.-%, bevorzugt 70 bis 100 Gew.-%, besonders bevorzugt 80 bis 100 Gew.-%, ganz besonders bevorzugt 90 bis 100 Gew.-%, erfindungsgemäßer wasserabsorbierender Polymere, wobei die Umhüllung der absorbierenden Schicht selbstverständlich nicht berücksichtigt ist.

Zur Bestimmung der Güte der Nachvernetzung werden die getrocknete wasserabsorbierenden Polymere mit den nachfolgend beschrieben Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Zentrifugenretentionskapazität (CRC Centrifuge Retention Capacity)

Die Zentrifugenretentionskapazität der wasserabsorbierenden Polymere wird gemäß der von der EDANA (European Disposables and Nonwovens Association) empfohlenen Testmethode Nr. 441.2-02 "Centrifuge retention capacity" bestimmt.

### Extrahierbare

Der Gehalt an extrahierbaren Bestandteilen der wasserabsorbierenden Polymere wird gemäß der von der EDANA (European Disposables and Nonwovens Association) empfohlenen Testmethode Nr. 470.2-02 "Determination of extractable polymer content by potentiometric titration" bestimmt.

### Restmonomere

Der Gehalt an Restmonomeren der wasserabsorbierenden Polymere wird gemäß der von der EDANA (European Disposables and Nonwovens Association) empfohlenen Testmethode Nr. 410.2-02 "Residual monomers" bestimmt.

### Feuchtegehalt der Polymere

Der Wassergehalt der wasserabsorbierenden Polymere wird gemäß der von der EDANA (European Disposables and Nonwovens Association) empfohlenen Testmethode Nr. 430.2-02 "Moisture content" bestimmt.

Die EDANA-Testmethoden sind beispielsweise erhältlich bei der European Disposables and Nonwovens Association, Avenue Eugène Plasky 157, B-1030 Brüssel, Belgien.

### Beispiele

### Beispiele 1 bis 8:

In einem durch geschäumten Kunststoff isolierten Polyethylengefäß mit einem Fassungsvermögen von 10 l wurden 3.500 g entmineralisiertes Wasser, 1.500 g Acrylsäure und 15 g 15fach ethoxiliertes Trimethylolpropantriacrylat (beispielsweise Sartomer® SR9035) vorgelegt. Durch Zugabe von 50gew.-%iger Natronlauge wurde die auf 25°C gekühlte Acrylsäurelösung unter Rühren und Kühlen auf einen Neutralisationsgrad von 72 mol-% eingestellt. Vor Zugabe des Polymersationsinitiators wurde die Monomerlösung durch Einleiten von Stickstoff 30 Minuten inertisiert. Das Initiatorsystem wurde der gerührten Monomerlösung, jeweils als verdünnte wässrige Lösung, bei 4°C in der Reihenfolge 0,02 Gew.-% Natriumpersulfat, 0,007 Gew.-% Wasserstoffperoxid und 0,0015 Gew.-% Ascorbinsäure, jeweils bezogen auf Acrylsäure, zugesetzt. Durch einsetzende Polymerisation stieg die Temperatur auf 90°C, wobei en festes Hydrogel entstand. Das Hydrogel wurde mechanisch zerkleinert, 60 Minuten bei 150°C getrocknet, gemahlen und auf 100 bis 850 µm abgesiebt.

Die eingesetzte Acrylsäure enthielt definierte Mengen an Allylacrylat bzw. Allylalkohol.

| Examples | Allyl acrylate | Allyl alcohol | CRC | Extractables | Residual monomers |
|---|---|---|---|---|---|
| 1 | <0.0001 wt% | 0.0001 wt% | 26.8 g/g | 6.9 wt% | 0.267 wt% |
| 2 | <0.0001 wt% | 0.0010 wt% | 26.3 g/g | 7.0 wt% | 0.295 wt% |
| 3 | <0.0001 wt% | 0.0100 wt% | 26.6 g/g | 7.7 wt% | 0.406 wt% |
| 4 | <0.0001 wt% | 0.1000 wt% | 28.5 g/g | 9.3 wt% | 0.565 wt% |
| 5 | 0.0001 wt% | <0.0001 wt% | 28.2 g/g | 7.6 wt% | 0.255 wt% |
| 6 | 0.0010 wt% | <0.0001 wt% | 28.2 g/g | 8.5 wt% | 0.374 wt% |
| 7 | 0.0100 wt% | <0.0001 wt% | 28.7 g/g | 9.0 wt% | 0.397 wt% |
| 8 | 0.1000 wt% | <0.0001 wt% | 27.6 g/g | 9.9 wt% | 0.532 wt% |

## Patentansprüche

1. Verfahren zur Herstellung wasserabsorbierender Polymere durch Polymerisation einer Monomerlösung, enthaltend
a) Acrylsäure, wobei die Acrylsäure zumindest teilweise neutralisiert sein kann,
b) mindestens einen Vernetzer,
c) Allylacrylat und/oder Allylalkohol,
d) gegebenenfalls ein oder mehrere mit den unter a) genannten Monomeren copolymerisierbare ethylenisch und/oder allylisch ungesättigte Monomere und
e) gegebenenfalls ein oder mehrere wasserlösliche Polymere,
**dadurch gekennzeichnet, dass** die Lösung höchstens 0,002 Gew.-% Allylacrylat und/oder Allylalkohol, bezogen auf Acrylsäure, enthält.

2. Verfahren gemäß Anspruch 1, **dadurch gekennzeichnet, dass** die wasserabsorbierenden Polymere nachvernetzt werden.

3. Verfahren gemäß Anspruch 1 oder 2, **dadurch gekennzeichnet, dass** die Acrylsäure durch Gasphasenoxidation von Propan, Propen und/oder Acrolein hergestellt wird.

4. Verfahren gemäß einem der Ansprüche 1 bis 3, **dadurch gekennzeichnet, dass** die Acrylsäure vor der Polymerisation durch Kristallisation gereinigt wird.

5. Verfahren gemäß einem der Ansprüche 1 bis 4, **dadurch gekennzeichnet, dass** die Acrylsäure vor der Polymerisation durch mindestens zweistufige Schichtkristallisation gereinigt wird.

6. Verfahren gemäß Anspruch 4 oder 5, **dadurch gekennzeichnet, dass** die Acrylsäure vor der Kristallisation mindestens 98 Gew.-% Acrylsäure enthält.

7. Verfahren gemäß einem der Ansprüche 4 bis 6, **dadurch gekennzeichnet, dass** die Acrylsäure vor der Kristallisation mindestens 0,005 Gew.-% Allylacrylat und/oder Allylalkohol enthält.

8. Wässrige Monomerlösung zur Herstellung wasserabsorbierender Polymere, enthaltend
a) Acrylsäure, wobei die Acrylsäure zumindest teilweise neutralisiert sein kann,
b) mindestens einen Vernetzer,
c) Allylacrylat und/oder Allylalkohol,
d) gegebenenfalls ein oder mehrere mit den unter a) genannten Monomeren copolymerisierbare ethylenisch und/oder allylisch ungesättigte Monomere und
e) gegebenenfalls ein oder mehrere wasserlösliche Polymere,
wobei die Lösung höchstens 0,002 Gew.-% Allylacrylat und/oder Allylalkohol, bezogen auf Acrylsäure, enthält.

9. Wässrige Monomerlösung gemäß Anspruch 8, **dadurch gekennzeichnet, dass** die Lösung höchstens 0,015 Gew.-% eines Hydrochinonhalbethers, bezogen auf Acrylsäure, enthält.

10. Wasserabsorbierende Polymere, enthaltend
i) einpolymerisierte Acrylsäure, wobei die einpolymerisierte Acrylsäure zumindest teilweise neutralisiert sein kann,
ii) mindestens einen einpolymerisierten Vernetzer,
iii) einpolymerisiertes Allylacrylat und/oder Allylalkohol,
iv) gegebenenfalls ein oder mehrere einpolymerisierte mit den unter i) genannten Monomeren copolymerisierbare ethylenisch und/oder allylisch ungesättigte Monomere und
v) gegebenenfalls ein oder mehrere wasserlösliche Polymere, auf die die unter i) genannten Monomere zumindest teilweise aufgeproft sind,
wobei die Polymere höchstens 0,002 Gew.-% einpolymerisiertes Allylacrylat und/oder einpolymerisierten Allylalkohol, bezogen auf einpolymerisierte Acrylsäure, enthalten.

11. Verfahren zur Herstellung von Hygieneartikeln unter Verwendung wasserabsorbierender Polymere, erhältlich gemäß einem Verfahren der Ansprüche 1 bis 7.

12. Hygieneartikel, enthaltend wasserabsorbierende Polymere gemäß Anspruch 10.

## Claims

1. A process for preparing water absorbing polymers by polymerization of a monomer solution comprising
a) acrylic acid, which may be partially or completely neutralized,
b) at least one crosslinker,
c) allyl acrylate and/or allyl alcohol,
d) if appropriate one or more ethylenically and/or allylically unsaturated monomers copolymerizable with the monomers identified under a), and
e) if appropriate one or more water soluble polymers,
wherein the solution comprises not more than 0.002% by weight of allyl acrylate and/or allyl alcohol, based on acrylic acid.

2. The process according to claim 1 wherein the water absorbing polymers are postcrosslinked.

3. The process according to claim 1 or 2 wherein the acrylic acid is prepared by gas phase oxidation of propane, propene and/or acrolein.

4. The process according to any one of claims 1 to 3 wherein the acrylic acid is purified by crystallization before polymerization.

5. The process according to any one of claims 1 to 4 wherein the acrylic acid is purified by at least two stage layer crystallization before polymerization.

6. The process according to claim 4 or 5 wherein the acrylic acid comprises not less than 98% by weight of acrylic acid before crystallization.

7. The process according to any one of claims 4 to 6 wherein the acrylic acid comprises not less than 0.005% by weight of allyl acrylate and/or allyl alcohol before crystallization.

8. An aqueous monomer solution to prepare water absorbing polymers which comprises
a) acrylic acid, which may be partially or completely neutralized,
b) at least one crosslinker,
c) allyl acrylate and/or allyl alcohol,
d) if appropriate one or more ethylenically and/or allylically unsaturated monomers copolymerizable with the monomers identified under a), and
e) if appropriate one or more water soluble polymers,
wherein the solution comprises not more than 0.002% by weight of allyl acrylate and/or allyl alcohol, based on acrylic acid.

9. The aqueous monomer solution according to claim 8 wherein the solution comprises not more than 0.015% by weight of a hydroquinone half ether, based on acrylic acid.

10. Water absorbing polymers comprising
i) interpolymerized acrylic acid, which may be partially or completely neutralized,
ii) at least one interpolymerized crosslinker,
iii) interpolymerized allyl acrylate and/or allyl alcohol,
iv) if appropriate one or more interpolymerized ethylenically and/or allylically unsaturated monomers copolymerizable with the monomers identified under i), and
v) if appropriate one or more water soluble polymers onto which the monomers identified under i) are at least partially grafted,
wherein the polymers comprise not more than 0.002% by weight of interpolymerized allyl acrylate and/or interpolymerized allyl alcohol, based on interpolymerized acrylic acid.

11. A process for producing hygiene articles by using water absorbing polymers obtainable according to a process of claims 1 to 7.

12. Hygiene articles comprising water absorbing polymers according to claim 10.

## Revendications

1. Procédé de fabrication de polymères absorbant l'eau par polymérisation d'une solution de monomère, contenant :
a) de l'acide acrylique, l'acide acrylique pouvant être neutralisé au moins partiellement,
b) au moins un agent de réticulation,
c) un allylacrylate et/ou un allylalcool,
d) éventuellement un ou plusieurs monomères éthyléniquement insaturés et/ou allyliquement insaturés copolymérisables avec les monomères cités en a), et
e) éventuellement un ou plusieurs polymères solubles dans l'eau,
**caractérisé en ce que** la solution contient tout au plus 0,002 % en poids d'allylacrylate et/ou d'allylalcool, sur base de l'acide acrylique.

2. Procédé selon la revendication 1, **caractérisé en ce que** les polymères absorbant l'eau font l'objet d'une post-réticulation.

3. Procédé selon la revendication 1 ou 2, **caractérisé en ce que** l'acide acrylique est fabriqué par oxydation en phase gazeuse de propane, de propène et/ou d'acroléine.

4. Procédé selon l'une des revendications 1 à 3, **caractérisé en ce que** l'acide acrylique est purifié avant la polymérisation par cristallisation.

5. Procédé selon l'une des revendications 1 à 4, **caractérisé en ce que** l'acide acrylique est purifié avant la polymérisation par cristallisation en couche en au moins deux étapes.

6. Procédé selon la revendication 4 ou 5, **caractérisé en ce que** l'acide acrylique contient, avant la cristallisation, au moins 98 % en poids d'acide acrylique.

7. Procédé selon l'une des revendications 4 à 6, **caractérisé en ce que** l'acide acrylique contient avant la cristallisation au moins 0,005 % en poids d'allylacrylate et/ou d'allylalcool.

8. Solution de monomère aqueuse pour la fabrication de polymères absorbant l'eau, contenant :
a) de l'acide acrylique, l'acide acrylique pouvant être neutralisé au moins partiellement,
b) au moins un agent de réticulation,
c) un allylacrylate et/ou un allylalcool,
d) éventuellement un ou plusieurs monomères éthyléniquement insaturés et/ou allyliquement insaturés copolymérisables avec les monomères cités en a), et
e) éventuellement un ou plusieurs polymères solubles dans l'eau,
la solution contenant tout au plus 0,002 % en poids d'allylacrylate et/ou d'allylalcool, sur base de l'acide acrylique.

9. Solution de monomère aqueuse selon la revendication 8, **caractérisée en ce que** la solution contient tout au plus 0,015 % en poids d'un semi-éther d'hydroquinone, sur base de l'acide acrylique.

10. Polymères absorbant l'eau, contenant :
i) de l'acide acrylique polymérisé, l'acide acrylique polymérisé pouvant être neutralisé au moins partiellement,
ii) au moins un agent de réticulation polymérisé,
iii) un allylacrylate et/ou un allylalcool polymérisés,
iv) éventuellement un ou plusieurs monomères éthyléniquement insaturés et/ou allyliquement insaturés polymérisés copolymérisables avec les monomères cités en i), et
v) éventuellement un ou plusieurs polymères solubles dans l'eau sur lesquels les monomères mentionnés en i) sont au moins partiellement greffés,
les polymères contenant tout au plus 0,002 % en poids d'allylacrylate polymérisé et/ou d'allylalcool polymérisé, sur base de l'acide acrylique polymérisé.

11. Procédé de fabrication d'articles hygiéniques utilisant des polymères absorbant l'eau, qu'on obtient selon un procédé qu'on trouve aux revendications 1 à 7.

12. Articles hygiéniques contenant les polymères absorbant l'eau selon la revendication 10.
